# EUROPEAN PATENT SPECIFICATION

(11) **EP 1 473 216 B1**
(45) Date of publication and mention of the grant of the patent: **07.02.2007**
(21) Application number: 04008322.2
(22) Date of filing: 06.04.2004
(51) Int. Cl.: B62J 7/08

(54) **Tray for detachable coupling of a container on a rack for motorcycles**
Tragplatte zur lösbaren Kupplung eines Behälters an dem Gepäckträger eines Motorrades
Plateau pour le couplage amovible d'un conteneur sur un porte-bagages de motocyclette

(30) Priority: 28.04.2003 IT BO20030245
(43) Date of publication of application: 03.11.2004
(73) Proprietor: FA.CO. FABBRICA CONTENITORI S.R.L. in short FA.CO. S.R.L., 40050 Monte San Pietro, BO (IT)
(72) Inventor: Cau, Pierluigi, 40033 Casalecchio Di Reno (Prov BO) (IT)
(74) Representative: Modiano, Micaela Nadia

(56) References cited:
- DE-A- 10 242 029
- FR-A- 2 165 025
- US-A- 4 266 703

## Description

The present invention relates to an assembly for detachable coupling of a container on a rack for motorcycles.

It is an established practice to provide motorcycles with racks (almost always fitted at the rear and so as to protrude with respect to the vehicle) to carry items.

The solution most commonly used is to fit a specific pannier on the rack: the pannier is preferred because it is provided with a key-operated security lock to protect the contents.

The pannier can be fitted on the rack of the motorcycle by means of screws or other fastening elements or by means of a latch coupling that is operated by means of a key (generally the same key with which the lock of the pannier is operated).

US-A-4266703 discloses a slide mount for a motorcycle luggage box which comprises a first plate which is rigidly mounted on the motorcycle frame and a second plate which is rigidly attached to the underside of a luggage box. The first plate is provided with a plurality of slots or grooves extending in the direction of travel of the motorcycle and with a downward extending side wall on which a plurality of longitudinally spaced apertures are defined. A plurality of elongated tongued rails are provided on the underside of the second plate for slidingly engaging the slots or grooves of the first plate. A locking device, which comprises a plunger operated by a key, is attached to a side wall of the second plate. By operation of the key the plunger is inserted in one of the apertures of the first plate side wall or removed therefrom so as to lock or remove the box respectively.

The advantage of the second described solution is that it allows the user to choose whether to remove the pannier (and therefore its contents), using it as if it were a carryall case, or remove its contents and leave it fitted on the rack.

In some situations, the removable pannier also has drawbacks: for carrying bulky items (such as a bag containing sports equipment), it is not possible to resort to the pannier due to its limited capacity and because it is impossible to carry items that exceed its dimensions (for example a tennis racket).

Many motorcyclists fix the bag directly to the rack of the vehicle with suitable straps, so as to avoid being limited by the reduced volume of the pannier: however, this solution is rather precarious, since one cannot be certain of the stability of the coupling, which also requires rather long times to lock and remove the bag and entails crushing the contents of the bag.

The aim of the present invention is to obviate the above-cited drawbacks and to meet the cited requirements, by providing a tray for detachable coupling of a container on a rack for motorcycles by means of which it is possible to carry even large items.

Within this aim, an object of the present invention is to provide a tray that is simple, relatively easy to provide in practice, safe in use, effective in operation and has a relatively low cost.

This aim and this and other objects that will become better apparent hereinafter are achieved by the present assembly for detachable coupling of a container on a rack for motorcycles according to appended claim 1.

Further characteristics and advantages of the present invention will become better apparent from the following detailed description of a preferred but not exclusive embodiment of an assembly for detachable coupling of a container on a rack for motorcycles, illustrated by way of non-limiting example in the accompanying drawings, wherein:

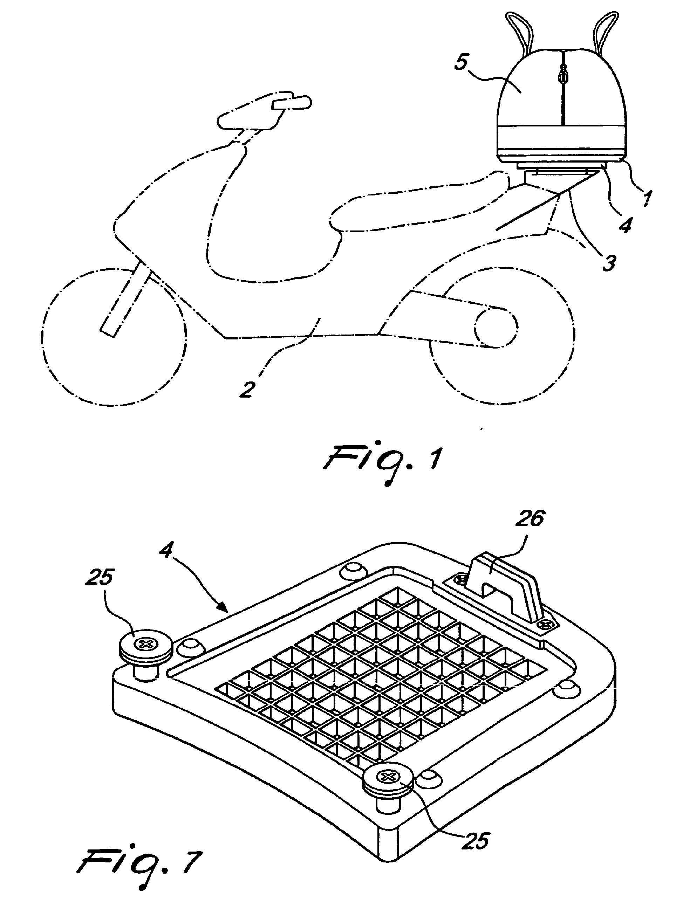

Figure 1 is a side view of a tray according to the invention, installed on a motorcycle;

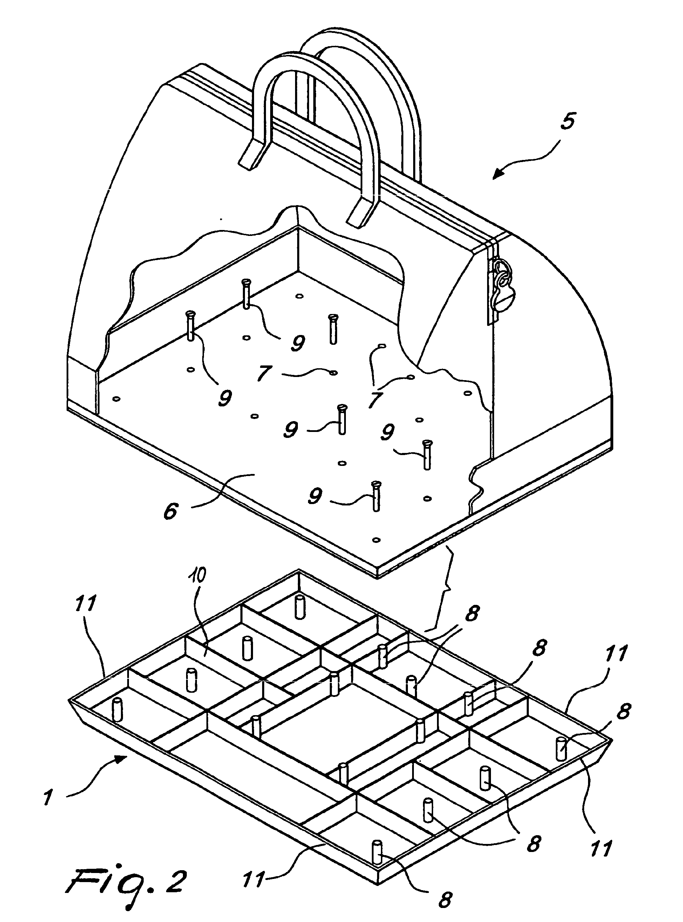

Figure 2 is a partially sectional exploded perspective view of a tray according to the invention, coupled to a bag;
Figure 3 is a plan view of a tray according to the invention;
Figure 4 is a front view of a tray according to the invention;

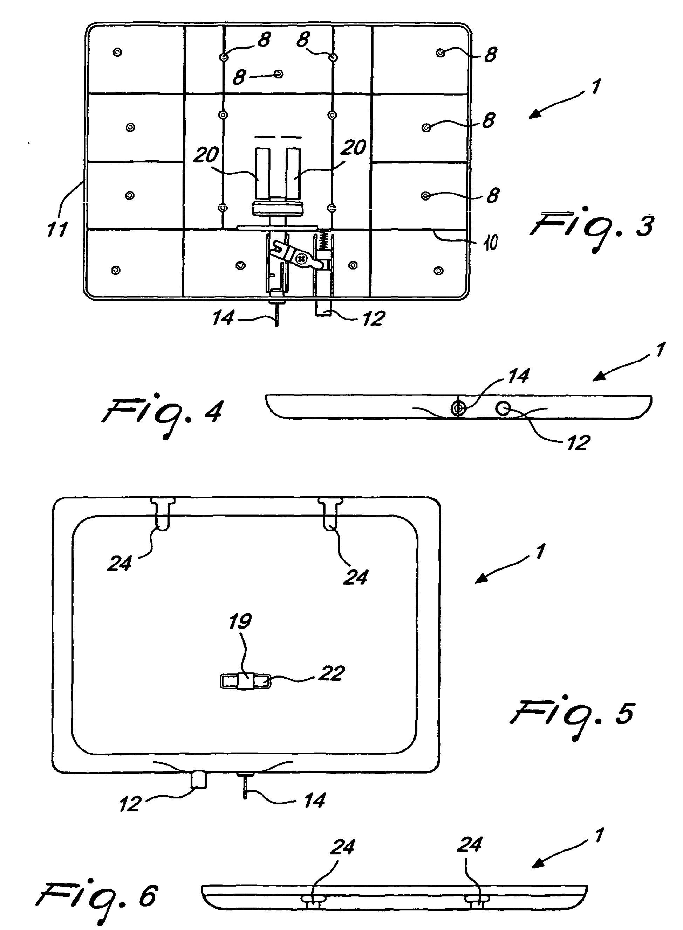

Figure 5 is a bottom view of a tray according to the invention;

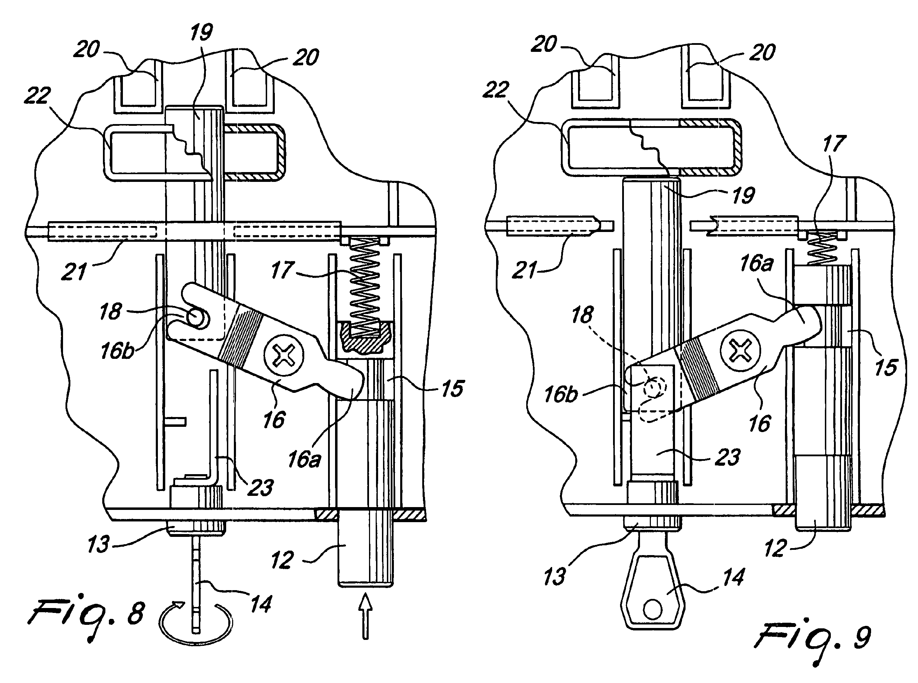

Figure 6 is a rear view of a tray according to the invention;
Figure 7 is a perspective view of a rack of a motorcycle suitable for coupling to a tray according to the invention;
Figure 8 is a plan view of the bolt of a tray according to the invention, in the configuration in which the lock is closed;
Figure 9 is a plan view of the bolt of a tray according to the invention, in the configuration in which the lock is open.

With reference to the figures, the reference numeral 1 generally designates a tray for detachable coupling of a container on a rack for motorcycles.

The motorcycle 2 has a rack 3 that is mounted at the rear in a cantilever fashion; a coupling support 4 can be fixed to said rack by means of screws.

The tray 1, which constitutes the base of a bag 5, is detachably fixed to the support 4: the bag 5 in fact is provided internally with a panel 6 that is placed on its bottom and is affected by a plurality of holes 7 that have the same distribution as respective protrusions 8 of the tray 1 that are substantially shaped like a hollow cylinder. A screw 9 (generally of the self-tapping type) can be inserted in each hole 7, and its thread engages the cavity of the respective protrusion 8, mutually fastening the panel 6 and the tray 1. Once the screws 7 are tightened, the tray 1 constitutes the base of the bag 5.

The tray 1 is substantially rectangular and has a plurality of longitudinal and transverse stiffening ribs 10 that are distributed on its surface that is directed toward the bag 5; some of the protrusions 8 are located at the intersections of the ribs, and the tray is delimited perimetrically by a raised rim 11.

The rim 11 has two contiguous openings designed for the passage of a pushbutton 12 and of a lock 13 operated by a key 14.

The pushbutton 12 is constituted substantially by a bar that has a variable cross-section (the part that protrudes from the tray 1 has a circular cross-section and the part that lies inside the rim 11 has a square cross-section) and is provided with a groove 15 within which an end 16a of a lever 16 is engaged; the lever 16 is pivoted to the tray 1 about a substantially vertical axis in its central portion.

The pushbutton 12, by way of the action of a spring 17 that acts axially, is retained so that its surface where the cross-section changes (between the square cross-section and the circular cross-section) rests on the internal surface of the rim 11 of the tray 1 and therefore so that the portion that has a circular cross-section protrudes from the tray 1.

The lever 16 has a second end 16b provided with a fork that accommodates a pin 18 that protrudes from the head of a slider 19 that can slide axially along a track 20.

Along its path, the slider 19 passes below a rib 10 where a reinforcement 21 is fitted which is suitable to retain the slider 19 in the correct operating position; in addition to the rib 10, the slider also crosses a compartment 22 for subsequent coupling to the support 4.

The lever 16 can rotate freely about its own pivoting axis by way of the action of the pushbutton 12 only when the lock 14 is arranged in the open position (Figure 9), in which a plate 23 is spaced from the surface of the lever 16; the lever 16 is instead blocked when the lock is arranged in the closed position (Figure 8), in which the plate 23 rests on a portion of the lever 16.

In a lower region, the tray 1 has cavities: one of such cavities, in a substantially centered position, is constituted by the coupling compartment 22, and two cavities, on the portion that lies opposite the one where the lock 14 is installed, are constituted by recesses 24 that have an approximately T-shaped cross-section.

The cavities 22 and 24 are designed for the coupling of the tray 1 to the support 4, which in fact has, proximate to one of its sides, two mushroom-shaped elements 25 that are suitable to slide within the recesses 24, and a selvage 26, in a more centered position, that is suitable to fit within the coupling compartment 22.

Once the mushroom-shaped elements 25 have engaged in the recesses 24 and the selvage 26 has been inserted in the compartment 22, to fix the tray 1 (and therefore the bag 5) to the support 4 (and therefore to the rack 3 of the motorcycle 2) it is sufficient to slide the slider 19 axially within the selvage 26, locking it.

The operation of the invention is as follows: the motorcyclist who wishes to carry a bag provided with the tray 1 at its base merely has to rest the tray 1 on the support 4 with the key 14 in the open position and then take care to slide the mushroom-shaped elements 25 into the recesses 24 until they are fully inserted. In this configuration, the selvage 26 is aligned with the compartment 22, in which it can be accommodated.

In order to allow the selvage 26 to enter the compartment 22, it is necessary to press the pushbutton 12 to produce the retraction of the slider 19, which in the inactive configuration is arranged transversely to the compartment 22.

Once the selvage 26 has been inserted in the compartment 22, it is possible to release the pushbutton 12, which by way of the action of the spring 17 again protrudes externally from the rim 11 of the tray 1, moving the slider 19 again transversely to the compartment, thus locking the selvage 26.

Finally, by turning the key 14 into the closed position, the plate 23 of the lock 13 rests on the lever 16, preventing its movement and thus preventing the release of the selvage and the consequent spacing of the tray 1 from the support 4.

In order to release the bag again, it is necessary to turn the key 14 into the open position, push the pushbutton 12 and first extract the selvage 26 from the compartment 22 and then extract the mushroom-shaped elements 25 from the recesses 24.

It has thus been shown that the invention achieves the intended aim and object.

The invention thus conceived is susceptible of numerous modifications and variations, all of which are within the scope of the appended claims.

For example, as an alternative to the bag 5 it is possible to use all kinds of container, such as for example carryall cases, rucksacks or particular specific carriers for specific transports. Good design practice suggests the use of containers that have minimal lateral protrusion with respect to the front contour of the motorcycle with the motorcyclist on board, in order to reduce the friction of the container with the air during travel, so as to subject the tray 1, the mushroom-shaped elements 25 and the selvage 26 to the least possible stress.

Further, the coupling between the tray 1 and the support 4 provided by way of the mushroom-shaped elements 25 and the recesses 24 can be replaced with any other equivalent; in particular, the rim of the tray can have a rear protrusion that is substantially hook-shaped and is suitable to be accommodated within a receptacle formed on a raised rim of the support.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Assembly for detachably coupling a container (5) to a rack (3) of a motorcycle (2) comprising a coupling support (4), which can be fixed to a rack (3) of a motorcycle (2), and a tray (1) having an upper surface, on which a plurality of elements (7, 8, 9) for fixing said tray (1) to the bottom of said container (5) are distributed, and a lower surface, on which bolt-type means with a lock (13) operated by a key (14) are disposed for coupling and locking said tray (1) to said coupling support (4), **characterized in that** said bolt-type means comprise a pushbutton (12) that can slide axially within a guide of said tray (1), elastic means (17) acting on said pushbutton (12) for retaining it in a protruding position, in which a portion of said pushbutton (12) protrudes from said tray (1), and a slider (19) that can slide axially along a track (20) of said tray (1), said pushbutton (12) and said slider (19) being mutually associated by a lever (16), which is pivoted in its central portion to said tray (1) about an axis that is substantially perpendicular to said tray (1) and which has an end (16a) that is engaged in a groove (15) of said pushbutton (12) and a second end (16b) that is provided with a fork that accommodates a pin (18) that protrudes from said slider (19), said coupling support (4) comprising a selvage (26) that is suitable to fit within a coupling compartment (22) which is provided in a lower region of said tray (1), said slider (19) being transversely movable inside said coupling compartment (22) and slidable within said selvage (26), locking it so as to fix said tray (1) to said support (4).

2. Assembly according to claim 1, **characterized in that** said track (20) is parallel to said guide, said lever (16) being a rocker-lever.

3. Assembly according to claim 1 or 2, **characterized in that** said coupling support (4) comprises elements (25) for coupling to respective recesses (24) of said tray (1).

4. Assembly according to claim 3, **characterized in that** said elements (25) are mushroom-shaped, said recesses (24) having a T-shaped cross-section.

5. Assembly according to one or more of the preceding claims, **characterized in that** said tray (1) comprises raised perimetrical rims (11) and a plurality of longitudinal and transverse stiffening ribs (10).

6. Assembly according to claim 5, **characterized in that** one of said rims (11) has two contiguous openings designed for the passage of said pushbutton (12) and said lock (13) respectively.

7. Assembly according to one or more of the preceding claims, **characterized in that** said lock (13) comprises a movable plate (23), said lock (13) being actuated by turning said key (14) from a locked configuration, in which said plate (23) is proximate to said end (16a) of said lever (16) preventing its movements, and an open position, in which said plate (23) is spaced from said lever (16) that can freely rotate about said axis.

8. Assembly according to claim 5, **characterized in that** said pushbutton (12) comprises a bar that has a circular cross-section part protruding from one of said rims (11) and a square cross-section part laying inside said rim (11), said groove (15) being provided on said square cross-section part and said elastic means (17) retaining said pushbutton (12) so that its surface where the cross-section changes rests on the internal surface of said rim (11).

9. Assembly according to one ore more of the preceding claims, **characterized in that** it comprises a reinforcement panel (6) that is arranged on the bottom of said container (5) and inside it, said panel (6) being coupled to said tray (1) by way of said plurality of fixing elements (7, 8, 9), so as to constitute the base of said container (5).

10. Assembly according to claim 9, **characterized in that** said panel (6) is affected by a plurality of holes (7) and **in that** said plurality of fixing elements (7, 8, 9) comprise a correspondent plurality of protrusions (8), which are distributed on said upper surface of said tray (1) and which are shaped like hollow cylinder, and screws (9) that are insertable in each of said holes (7) and engageble in the cavity of said corresondent protrusion (8) mutually fastening said panel (6) to said tray (1).

## Patentansprüche

1. Ein Aufbau zur lösbaren Kupplung eines Behälters (5) an einen Gepäckträger (3) eines Motorrads (2), der einen Kupplungshalter (4) umfasst, der an einem Gepäckträger (3) eines Motorrads (2) befestigt werden kann, und eine Tragplätte (1) umfasst, die eine obere Oberfläche hat, auf der eine Vielzahl von Elementen (7, 8, 9) zum Befestigen der Tragplatte (1) an der Unterseite des Behälters (5) verteilt sind, und eine untere Oberfläche hat, auf der schraubenartige Mittel mit einem von einem Schlüssel (14) betriebenen Verschluß (13) für die Kupplung und das Verschließen der Tragplatte (1) am Kupplungshalter (4) angeordnet sind, **dadurch gekennzeichnet, dass** das schraubenartige Mittel einen Druckknopf (12) umfasst, der axial innerhalb einer Führung der Tragplatte (1) gleiten kann, ein elastisches Mittel (17) umfasst, das auf den Druckknopf (12) einwirkt, um ihn in einer vorragenden Stellung zurückzuhalten, in dem ein Abschnitt des Druckknopfs (12) aus der Tragplatte (1) .vorragt, und einen Schieber (19) umfasst, der axial an einer Spur (20) der Tragplatte (1) entlang gleiten kann, wobei der Druckknopf (12) und der Schieber (19) gegenseitig durch einen Hebel (16) verbunden sind, der in seinem mittleren Abschnitt an der Tragplatte (1) um eine Achse herum drehbar ist, die im Wesentlichen senkrecht zur Tragplatte (1) steht und die ein Ende (16a) hat, das in einer Vertiefung (15) des Druckknopfs (12) in Eingriff steht, und ein zweites Ende (16b) hat, das mit einer Gabel bereitgestellt wird, die einen Stift (18) aufnimmt, der aus dem Schieber (19) vorragt, wobei der Kupplungshalter (4) eine Leiste (26) umfasst, die geeignet ist, um in ein Kupplungsfach (22) zu passen, das in einem unteren Bereich der Tragplatte (1) bereitgestellt ist, wobei der Schieber (19) transversal innerhalb des Kupplungsfachs (22) bewegt werden kann und innerhalb der Leiste (26) verschoben werden kann, womit er es verschließt, um die Tragplatte (1) am Halter (4) zu befestigen.

2. Der Aufbau nach Anspruch 1, **dadurch gekennzeichnet, dass** sich die Spur (20) parallel zur Führung befindet, wobei der Hebel (16) ein Kipphebel ist.

3. Der Aufbau nach Anspruch 1 oder 2, **dadurch gekennzeichnet, dass** der Kupplungshalter (4) Elemente (25) zur Kupplung an jeweilige Einschnitte (24) der Tragplatte (1) umfasst.

4. Der Aufbau nach Anspruch 3, **dadurch gekennzeichnet, dass** die Elemente (25) pilzförmig sind, wobei die Einschnitte (24) einen T-förmigen Querschnitt haben.

5. Der Aufbau nach einem oder mehreren der vorherigen Ansprüche, **dadurch gekennzeichnet, dass** die Tragplatte (1) erhöhte Außenrandkrempen (11) und eine Vielzahl von Längs- und Quer-Versteifungsrippen (10) umfasst.

6. Der Aufbau nach Anspruch 5, **dadurch gekennzeichnet, dass** eine der Krempen (11) über zwei zusammenhängende Öffnungen verfügt, die jeweils für den Durchgang des Druckknopfs (12) und des Verschlusses (13) aufgebaut sind.

7. Der Aufbau nach einem oder mehreren der vorherigen Ansprüche, **dadurch gekennzeichnet, dass** der Verschluß (13) eine bewegliche Platte (23) umfasst, wobei der Verschluß (13) durch das Drehen des Schlüssels (14) aus einer geschlossenen Anordnung betätigt wird, in der sich die Platte (23) nahe am Ende (16a) des Hebels (16) befindet, seine Bewegungen verhindernd, und einer offenen Stellung befindet, in der die Platte (23) vom Hebel (16) beabstandet ist, der sich frei um die Achse herum drehen kann.

8. Der Aufbau nach Anspruch 5, **dadurch gekennzeichnet, dass** der Druckknopf (12) eine Stange umfasst, die ein kreisförmiges Querschnittsteil umfasst, das aus einer der Krempen (11) vorragt, und ein quadratisches Querschnittsteil umfasst, das innerhalb der Krempe (11) liegt, wobei die Vertiefung (15) auf dem quadratischen Querschnittsteil bereitgestellt wird und das elastische Mittel (17) den Druckknopf (12) zurückhält, so dass seine Oberfläche, wo sich der Querschnitt ändert, auf der Innenfläche der Krempe (11) liegt.

9. Der Aufbau nach einem oder mehreren der vorherigen Ansprüche, **dadurch gekennzeichnet, dass** er eine Verstärkungsplatte (6) umfasst, die am Boden des Behälters (5) und darin angeordnet ist, wobei die Platte (6) mittels der Vielzahl von Befestigungselementen (7, 8, 9) an die Tragplatte (1) gekoppelt sind, um die Basis des Behälters (5) zu bilden.

10. Der Aufbau nach Anspruch 9, **dadurch gekennzeichnet, dass** die Platte (6) von einer Vielzahl von Löchern (7) durchdrungen ist und die Vielzahl von Befestigungselementen (7, 8, 9) eine entsprechende Vielzahl von Vorsprüngen (8) umfassten, die auf der oberen Oberfläche der Tragplatte (1) verteilt sind und wie hohle Zylinder geformt sind, und Schrauben (9) umfassten, die in jedes der Löcher (7) steckbar sind und in den Hohlraum des entsprechenden Vorsprungs (8) in Eingriff gebracht werden können, wobei die Platte (6) wechselseitig an der Tragplatte (1) festgemacht ist.

## Revendications

1. Ensemble pour le couplage amovible d'un conteneur (5) à un porte-bagages (3) d'un cyclomoteur (2) comprenant un support de couplage (4), qui peut être fixé à un porte-bagages (3) d'un cyclomoteur (2), et un plateau (1) présentant une surface supérieure, sur laquelle sont distribués une pluralité d'éléments (7, 8, 9) pour fixer ledit plateau (1) à la base dudit conteneur (5), et une surface inférieure, sur laquelle des moyens de type pêne avec une serrure (13) actionnée par une clé (14) sont disposés pour coupler et verrouiller ledit plateau (1) audit support de couplage (4), **caractérisé en ce que** lesdits moyens de type pêne comprennent un bouton poussoir (12) qui peut coulisser axialement dans un guide dudit plateau (1), des moyens élastiques (17) agissant sur ledit bouton poussoir (12) pour le retenir dans une position en saillie, dans laquelle une portion dudit bouton poussoir (12) fait saillie dudit plateau (1), et un coulisseau (19) qui peut coulisser axialement le long d'un rail (20) dudit plateau (1), ledit bouton poussoir (12) et ledit coulisseau (19) étant mutuellement associés par un levier (16) qui est articulé dans sa partie centrale audit plateau (1) de façon pivotante autour d'un axe qui est sensiblement perpendiculaire audit plateau (1) et qui présente une extrémité (16a) qui vient en prise dans une rainure (15) dudit bouton poussoir (12) et une deuxième extrémité (16b) qui est munie d'une fourche qui reçoit une tige (18) qui fait saillie dudit coulisseau (19), ledit support de couplage (4) comprenant une bordure (26) qui est adaptée pour s'insérer dans un compartiment de couplage (22) qui est prévu dans une région inférieure dudit plateau (1), ledit coulisseau (19) étant mobile transversalement à l'intérieur dudit compartiment de couplage (22) et coulissable dans ladite bordure (26), le verrouillant afin de fixer ledit plateau (1) audit support (4).

2. Ensemble selon la revendication 1, **caractérisé en ce que** ledit rail (20) est parallèle audit guide, ledit levier (16) étant un levier oscillant.

3. Ensemble selon la revendication 1 ou 2, **caractérisé en ce que** ledit support de couplage (4) comprend des éléments (25) pour le couplage à des évidements (24) respectifs dudit plateau (1).

4. Ensemble selon la revendication 3, **caractérisé en ce que** lesdits éléments (25) sont en forme de champignon, lesdits évidements (24) présentant une section transversale en forme de T.

5. Ensemble selon l'une ou plusieurs des revendications précédentes, **caractérisé en ce que** ledit plateau (1) comprend des bords périmétriques relevés (11) et une pluralité de nervures de renforcement (10) longitudinales et transversales.

6. Ensemble selon la revendication 5, **caractérisé en ce que** l'un desdits bords (11) présente deux ouvertures contiguës désignés pour le passage dudit bouton poussoir (12) et de ladite serrure (13) respectivement.

7. Ensemble selon l'une ou plusieurs des revendications précédentes, **caractérisé en ce que** ladite serrure (13) comprend une plaque mobile (23), ladite serrure (13) étant actionnée en tournant ladite clé (14) dans une configuration verrouillée, dans laquelle ladite plaque (23) est à proximité de ladite extrémité (16a) dudit levier (16) en prévenant ses mouvements, et une position ouverte, dans laquelle ladite plaque (23) est espacée dudit levier (16) qui peut tourner librement autour dudit axe.

8. Ensemble selon la revendication 5, **caractérisé en ce que** ledit bouton poussoir (12) comprend une barre qui présente une portion de section transversale circulaire faisant saillie de l'un desdits bords (11) et une portion de section transversale carrée se trouvant à l'intérieur dudit bord (11), ladite rainure (15) étant prévue sur ladite portion de section transversale carrée et lesdits moyens élastiques (17) retenant ledit bouton poussoir (12) de sorte que sa surface où la section transversale change, repose sur la surface interne dudit bord (11).

9. Ensemble selon l'une ou plusieurs des revendications précédentes, **caractérisé en ce qu'**il comprend un panneau de renforcement (6) qui est agencé sur la base dudit conteneur (5) et à l'intérieur de celui-ci, ledit panneau (6) étant couplé audit plateau (1) au moyen d'une pluralité d'éléments de fixation (7, 8, 9), afin de constituer la base dudit conteneur (5).

10. Ensemble selon la revendication 9, **caractérisé en ce que** ledit panneau (6) est affecté d'une pluralité de trous (7) et **en ce que** ladite pluralité d'éléments de fixation (7, 8, 9) comprennent une pluralité de saillies (8) correspondantes, qui sont distribués sur ladite surface supérieure dudit plateau (1) et qui sont conformés comme un cylindre creux, et des vis (9) qui sont insérables dans chacun desdits trous (7) et pouvant venir en prise dans la cavité de ladite saillie (8) correspondante fixant mutuellement ledit panneau (6) audit plateau (1).
